# EUROPEAN PATENT APPLICATION

(11) **EP 4 524 194 A1**
(43) Date of publication of application: **19.03.2025**
(21) Application number: 23803578.6
(22) Date of filing: 10.05.2023
(51) Int. Cl.: C08L 51/04, C08F 8/48, C08F 212/08, C08F 220/14, C08L 33/12, C08L 33/14, C08L 55/02

(54) **RESIN COMPOSITION AND MOLDED OBJECT**

(30) Priority: 11.05.2022 JP 2022078075
(71) Applicant: Kuraray Co., Ltd., Kurashiki-shi, Okayama 710-0801 (JP)
(72) Inventor: NOMOTO, Yusaku, Tainai-shi, Niigata 959-2691 (JP)
(74) Representative: Müller-Boré & Partner Patentanwälte PartG mbB
(86) International application number: PCT/JP2023/017567
(87) International publication number: WO 2023/219103

(57) **Abstract**

An object of the present invention is to provide a resin composition that is excellent in various physical properties, such as heat resistance, surface hardness, impact resistance, and surface appearance. The present invention provides a resin composition comprising the following: 5 to 49 parts by mass of a methacrylic copolymer (A) comprising 5 to 97 mass% of a methyl methacrylate unit, 1 to 70 mass% of a structural unit (R) represented by the following formula (I), 1 to 48 mass% of an α-methylstyrene unit, 1 to 48 mass% of at least one unit selected from the group consisting of a styrene unit and a maleic anhydride unit, and 0 to 20 mass% of an unsubstituted or N-substituted maleimide unit; 51 to 95 parts by mass of one or more styrene resins (B) selected from the group consisting of ABS resins, AES resins, ASA resins, and AS resins; and 0 to 30 parts by mass of a methacrylic resin (C). 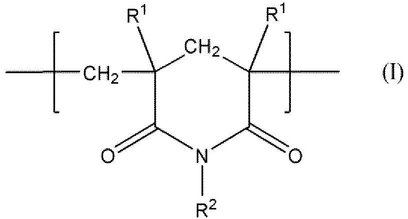 (In formula (I), R¹ and R² are as defined in the specification.)

## Description

### Technical Field

The present invention relates to a resin composition comprising a methacrylic copolymer and a styrene resin, a molded article, and an automotive interior or exterior part comprising the molded article.

### Background Art

Conventionally, maleimide copolymers represented by **N-**phenylmaleimide-styrene copolymers have been used for the purpose of improving heat resistance of thermoplastic resins, such as acrylonitrile-butadiene-styrene (ABS) resin and acrylonitrile-styrene (AS) resin (PTL 1 and PTL 2).

However, while maleimide copolymers can improve heat resistance and/or surface hardness of thermoplastic resins, such as ABS resin and AS resin, they deteriorate impact resistance, surface appearance (glossiness and hue), and other physical properties.

To address these issues, PTL 3 discloses a maleimide copolymer in which a vinyl cyanide monomer is copolymerized as a third monomer. Further, PTL 4 discloses a maleimide copolymer in which a methacrylic ester monomer is copolymerized as a third monomer. Although copolymerization with a vinyl cyanide monomer increases the density of entanglement between molecules and improves impact resistance, there is a problem in that strong coloration occurs. Further, although copolymerization with a methacrylic ester monomer imparts glossiness resulting from the methacrylic ester monomer and achieves a reduction in coloring by reducing the amount of residual maleimide monomers, which results in improved surface appearance, heat resistance will be insufficient.

As described above, there remains room for study on a technique for improving heat resistance of thermoplastic resins, such as ABS resin and AS resin, and achieving further well-balanced surface hardness, surface appearance, and impact resistance.

### Citation List

### Patent Literature

PTL 1: JPS57-98536A
PTL 2: JPS57-125241A
PTL 3: JPH03-205411A
PTL 4: JP2001-233919A

### Summary of Invention

### Technical Problem

In view of the above circumstances, an object of the present invention is to provide a resin composition having various excellent physical properties, such as heat resistance, surface hardness, impact resistance, and surface appearance.

### Solution to Problem

As a result of study to achieve the above object, the present invention encompassing the following embodiments has been accomplished.
[1] A resin composition comprising:
   5 to 49 parts by mass of a methacrylic copolymer (A) comprising 5 to 97 mass% of a methyl methacrylate unit, 1 to 70 mass% of a structural unit (R) represented by the following formula (I), 1 to 48 mass% of an α-methylstyrene unit, 1 to 48 mass% of at least one unit selected from the group consisting of a styrene unit and a maleic anhydride unit, and 0 to 20 mass% of an unsubstituted or N-substituted maleimide unit;
   51 to 95 parts by mass of one or more styrene resins (B) selected from the group consisting of ABS resins, AES resins, ASA resins, and AS resins; and
   0 to 30 parts by mass of a methacrylic resin (C), 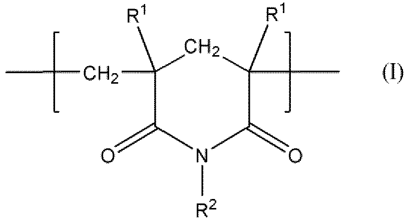 wherein in formula (I), each R¹ is independently a hydrogen atom or a methyl group, and R² is a hydrogen atom, a C₁-C₁₈ alkyl group, a C₃-C₁₂ cycloalkyl group, or a C₆-C₁₅ organic group containing an aromatic ring.
[2] The resin composition according to [1], wherein in the methacrylic copolymer (A), the total content of the α-methylstyrene unit and the styrene unit is 2 to 40 mass% based on all structural units, and the proportion of the α-methylstyrene unit based on the total content of the α-methylstyrene unit and the styrene unit is 51 to 99 mass%.
[3] The resin composition according to [1] or [2], wherein in the methacrylic copolymer (A), the content of the structural unit (R) is 20 to 60 mass% based on all structural units.
[4] The resin composition according to any one of [1] to [3], wherein in the methacrylic copolymer (A), a reaction for forming the structural unit (R) is an imide cyclization reaction in which an imidizing agent is added to a precursor polymer in an extruder, and the resulting mixture is kneaded and allowed to react.
[5] The resin composition according to any one of [1] to [4], wherein the resin composition has a Vicat softening temperature of 105°C to 140°C as measured by a method described in the B50 method in JIS K 7206.
[6] The resin composition according to any one of [1] to [5], wherein the styrene resin is an ASA resin.
[7] A molded article comprising the resin composition of any one of [1] to [6].
[8] An injection molded article comprising the resin composition of any one of [1] to [6].
[9] The molded article according to [7] or [8], which is used as an automotive interior part or exterior part.

### Advantageous Effects of Invention

According to the present invention, the use of a methacrylic copolymer having excellent heat resistance, rigidity, and fluidity, as well as excellent compatibility with styrene resins makes it possible to obtain a molded article comprising a resin composition having excellent heat resistance, surface hardness, impact resistance, moldability, and surface appearance, and obtain an automotive interior or exterior part comprising the molded article.

### Description of Embodiments

In the present specification, the singular forms (e.g., "a," "an," and "the") are intended to include both the singular and the plural, unless otherwise indicated in the specification or clearly contradicted by context.

The resin composition of the present invention comprises a methacrylic copolymer (A) and a styrene resin (B). The content of the methacrylic copolymer (A) in the resin composition is in the range of 5 to 49 mass%, preferably 10 to 45 mass%, and more preferably 15 to 40 mass%. The resin composition of the present invention has excellent heat resistance and surface hardness when the content of the methacrylic copolymer (A) is 5 mass% or more, and when the content is 49 mass% or less, impact resistance is maintained.

### Methacrylic Copolymer (A)

The methacrylic copolymer (A) according to the present invention comprises 5 to 97 mass% of a methyl methacrylate unit, 1 to 70 mass% of a structural unit (R), 1 to 48 mass% of a α-methylstyrene unit, 1 to 48 mass% of at least one unit selected from the group consisting of a styrene unit and a maleic anhydride unit, and 0 to 20 mass% of an unsubstituted or N-substituted maleimide unit. The methacrylic copolymer (A) used in the present invention may further comprise an additional vinyl monomer unit that is copolymerizable with methyl methacrylate. In the present invention, a structural unit in a polymer refers to a repeating unit constituting the polymer or a unit obtained by derivatizing at least a part of the repeating unit (e.g., an unsubstituted or N-substituted glutarimide unit). In the present specification, the term "structural unit" may be used to collectively refer to the methyl methacrylate unit, the structural unit (R), the α-methylstyrene unit, the styrene unit or maleic anhydride unit, the unsubstituted or N-substituted maleimide unit, and the additional vinyl monomer unit.

In the methacrylic copolymer (A) according to the present invention, the proportion of the methyl methacrylate unit is 5 to 97 mass%, preferably 6 to 95 mass%, more preferably 7 to 90 mass%, and even more preferably 10 to 70 mass%, based on all structural units. From the viewpoint of the total light transmittance and thermal decomposition resistance of the obtained methacrylic copolymer, the proportion of the methyl methacrylate unit is preferably in the above ranges.

In the methacrylic copolymer (A) according to the present invention, the proportion of the α-methylstyrene unit is 1 to 48 mass%, preferably 3 to 40 mass%, more preferably 5 to 35 mass%, and even more preferably 7 to 30 mass%, based on all structural units. The proportion of the α-methylstyrene unit is preferably in the above ranges, for example, from the viewpoint of heat resistance, elastic modulus, compatibility with styrene resins, and thermal decomposition resistance of the obtained methacrylic copolymer, from the viewpoint of productivity (polymerizability), and further from the viewpoint of suppressing inhibition of a glutarimidation reaction by intramolecular cyclization of two adjacent structural units derived from (meth)acrylic acid, which will be described below.

In the methacrylic copolymer (A) according to the present invention, the proportion of the styrene unit and/or maleic anhydride unit is 1 to 48 mass%, preferably 3 to 40 mass%, more preferably 5 to 35 mass%, and even more preferably 7 to 30 mass%, based on all structural units. The proportion of the styrene unit is preferably in the above ranges, for example, from the viewpoint of thermal decomposition resistance, fluidity, and heat resistance of the obtained methacrylic copolymer, and further from the viewpoint of suppressing inhibition of a glutarimidation reaction by intramolecular cyclization of two adjacent structural units derived from (meth)acrylic acid, which will be described below. The proportion of the maleic anhydride unit is preferably in the above ranges, for example, from the viewpoint of thermal decomposition resistance and fluidity of the obtained methacrylic copolymer, and further from the viewpoint of suppressing inhibition of a glutarimidation reaction by intramolecular cyclization of two adjacent structural units derived from (meth)acrylic acid, which will be described below. In the present invention, a styrene unit having excellent compatibility with the styrene resin (B) is preferably contained.

In the methacrylic copolymer (A) according to the present invention, the total proportion of the α-methylstyrene unit and the styrene unit is preferably 2 to 40 mass%, more preferably 5 to 35 mass%, and even more preferably 10 to 30 mass%, based on all structural units. When the total proportion of the α-methylstyrene unit and the styrene unit is in the above ranges, a glutarimidation reaction by intramolecular cyclization of two adjacent structural units derived from (meth)acrylic acid, which will be described below, is unlikely to be inhibited. Further, the proportion of the α-methylstyrene unit is preferably 30 to 95 mass%, more preferably 35 to 90 mass%, and even more preferably 40 to 85 mass%, based on the total proportion of the α-methylstyrene unit and the styrene unit. When the proportion of the α-methylstyrene unit is in the above ranges, the methacrylic copolymer used in the present invention has high heat resistance and rigidity.

The structural unit (R) is a structural unit having one or more ring structures selected from the group consisting of an N-substituted or unsubstituted glutarimide unit in the main chain.

The N-substituted or unsubstituted glutarimide unit is a unit having an N-substituted or unsubstituted 2,6-dioxopiperidinediyl structure. Examples of the unit having an N-substituted or unsubstituted 2,6-dioxopiperidinediyl structure include structural units represented by formula (I). The N-substituted glutarimide unit may be, for example, one or more units selected from an N-methylglutarimide unit, an N-butylglutarimide unit, an N-cyclohexylglutarimide unit, an N-phenylglutarimide unit, and the like.

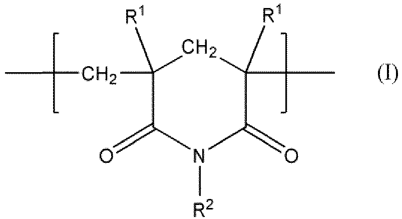

In formula (I), each R¹ is independently a hydrogen atom or a methyl group, and two R¹s are both preferably methyl. R² is a hydrogen atom, a C₁-C₁₈ alkyl group, a C₃-C₁₂ cycloalkyl group, or a C₆-C₁₅ organic group containing an aromatic ring, preferably methyl, n-butyl, cyclohexyl, or benzyl, more preferably methyl, n-butyl, or cyclohexyl, and most preferably methyl.

The structural unit (R) can be formed, for example, by an imide cyclization reaction in which an imidizing agent is added to a precursor polymer in an extruder and the resulting mixture is kneaded and allowed to react. In a preferred embodiment, the structural unit represented by formula (I) may be produced, for example, by the reaction of the corresponding acid anhydride (IIa) with an imidizing agent represented by R²NH₂ as shown in Scheme (i), or by an intramolecular cyclization reaction of a copolymer having a partial structure of formula (III). Heating is preferably performed to convert the structural unit represented by formula (III) to the structural unit represented by formula (I) by intramolecular cyclization reaction.

### Scheme (i)

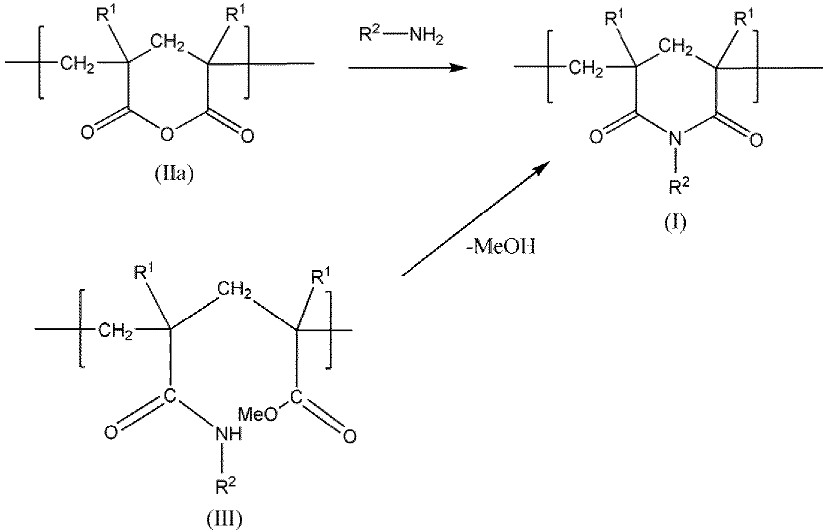

In the formula, R¹ and R² are as defined above.

The N-substituted or unsubstituted glutarimide unit can be obtained by the method described in WO2005/10838A1, JP2010-254742A, JP2008-273140A, JP2008-274187A, or the like, specifically, for example, by a method comprising reacting two adjacent structural units derived from methyl (meth)acrylate or glutaric anhydride units with an imidizing agent, for example, an aliphatic hydrocarbon group-containing amine, such as ammonia, methylamine, ethylamine, n-propylamine, isopropylamine, n-butylamine, isobutylamine, tert-butylamine, or n-hexylamine; an aromatic hydrocarbon group-containing amine, such as aniline, toluidine, or trichloroaniline; an alicyclic hydrocarbon group-containing amine, such as cyclohexylamine; or urea, 1,3-dimethylurea, 1,3-diethylurea, or 1,3-dipropylurea. Among these, methylamine is preferred. When the imidization reaction is performed, a part of the methyl methacrylate unit may be hydrolyzed to form a carboxyl group. The carboxyl group is preferably returned to the original methyl methacrylate unit by an esterification reaction that is performed by treatment with an esterifying agent. The esterifying agent is not particularly limited as long as the effect of the present invention can be provided. Preferable examples of the esterifying agent include dimethyl carbonate and trimethyl acetate. In addition to the esterifying agent, a tertiary amine, such as trimethylamine, triethylamine, or tributylamine, may be used together as a catalyst.

In the methacrylic copolymer (A) according to the present invention, the proportion of the structural unit (R) is 1 to 70 mass%, preferably 12 to 68 mass%, more preferably 15 to 65 mass%, and even more preferably 20 to 60 mass%, based on all structural units. Taking into account solving the problem of the present invention, and also taking into account the fact that an increase in the content of the structural unit (R) improves heat resistance and thermal decomposition resistance of the methacrylic copolymer, the proportion of the structural unit (R) is preferably equal to or more than the lower limit values mentioned above. Further, from the viewpoint of reducing melt viscosity and improving molding processability, it is preferably equal to or less than the upper limit values mentioned above.

The methacrylic copolymer (A) according to the present invention may or may not comprise an N-substituted or unsubstituted maleimide unit in addition to the structural unit (R) etc. Therefore, in the present invention, the phrase "the methacrylic copolymer (A) comprising 0 to 20 mass% of an unsubstituted or N-substituted maleimide unit" may also include methacrylic copolymers (A) that do not comprise an unsubstituted or N-substituted maleimide unit. The N-substituted or unsubstituted maleimide unit is a unit having an N-substituted or unsubstituted 2,5-pyrrolidinedione structure.

Examples of the unit having an N-substituted or unsubstituted 2,5-pyrrolidinedione structure include a structural unit represented by formula (VI).

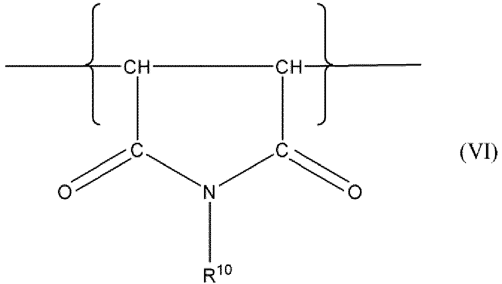

In formula (VI), R¹⁰ is a hydrogen atom, a C₁-C₁₈ alkyl group, a C₃-C₁₂ cycloalkyl group, or a C₆-C₁₅ organic group containing an aromatic ring.

The structural unit represented by formula (VI) can be incorporated into a methacrylic polymer, for example, by a method of polymerizing a monomer mixture containing the monomer represented by formula (VI), or by a reaction of a maleic anhydride unit in a reaction product obtained by polymerizing a monomer mixture containing maleic anhydride with an imidizing agent represented by R³NH₂.

The N-substituted or unsubstituted maleimide unit is obtained by the method described in JP61-026924A, JPH07-042332A, JPH09-100322A, JP2001-329021A, or the like, specifically, by reacting a maleic anhydride unit with an imidizing agent, for example, an aliphatic hydrocarbon group-containing amine, such as ammonia, methylamine, ethylamine, n-propylamine, isopropylamine, n-butylamine, isobutylamine, tert-butylamine, or n-hexylamine; an aromatic hydrocarbon group-containing amine, such as aniline, toluidine, or trichloroaniline; an alicyclic hydrocarbon group-containing amine, such as cyclohexylamine; or urea, 1,3-dimethylurea, 1,3-diethylurea, or 1,3-dipropylurea. Among these, methylamine is preferred.

In the methacrylic copolymer (A) according to the present invention, the proportion of the N-substituted or unsubstituted maleimide unit is 0 to 20 mass%, more preferably 0 to 15 mass%, and even more preferably 0 to 10 mass%, based on all structural units.

The methacrylic copolymer (A) according to the present invention may comprise an additional vinyl monomer unit that is copolymerizable with the methyl methacrylate unit. The additional vinyl monomer unit can be appropriately selected according to the properties required of the methacrylic copolymer (A). When properties such as thermal stability, fluidity, chemical resistance, optical properties, and compatibility with other resins are particularly required, at least one member selected from the group consisting of acrylate monomer units, aromatic vinyl monomer units excluding styrene and α-methyl styrene, and vinyl cyanide monomer units is preferably used.

Among the monomers that constitute the monomer units described above, at least one member selected from the group consisting of methyl acrylate, ethyl acrylate, and acrylonitrile is preferable from the viewpoint of ease of availability.

Examples of the additional vinyl monomer unit that is copolymerizable with methyl methacrylate also include a methacrylamide unit represented by the following formula (A) and a 2-(hydroxyalkyl)acrylate unit represented by the following formula (B).

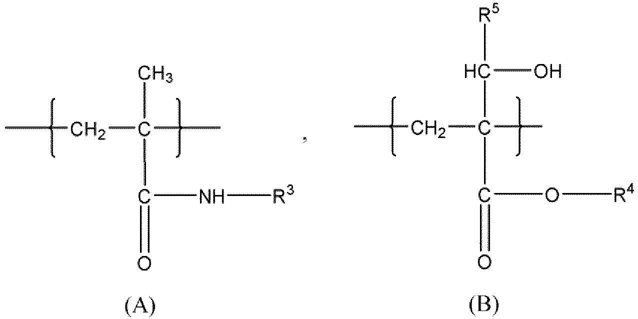

In the formula, R³ is a hydrogen atom, a C₁-C₁₈ alkyl group, a C₃-C₁₂ cycloalkyl group, or a C₆-C₁₅ organic group containing an aromatic ring, preferably a hydrogen atom, methyl, n-butyl, cyclohexyl, or benzyl, and more preferably methyl, n-butyl or cyclohexyl; and R⁴ and R⁵ are each independently a hydrogen group or a C₁-C₂₀ organic group, preferably a hydrogen atom or a C₁-C₁₀ organic group, and more preferably a hydrogen atom or a C₁-C₅ organic group. The organic group is not particularly limited as long as the organic group contains 1 to 20 carbon atoms. Examples of the organic group include linear or branched alkyl groups, linear or branched aryl groups, -OCOCH₃, and -CN. The organic group may contain a heteroatom, such as an oxygen atom. R⁴ is preferably a methyl group and R⁵ is preferably a hydrogen atom.

The methacrylic copolymer (A) according to the present invention may comprise a lactone ring unit as an additional vinyl monomer unit, in addition to the structural unit (R) etc. The lactone ring unit is a structural unit containing a >CH-O-C(=O)-group in the ring structure. In the structural unit containing a >CH-O-C(=O)- group in the ring structure, the number of ring-constituting elements is preferably 4 to 8, more preferably 5 to 6, and most preferably 6. Examples of structural units containing a >CH-O-C(=O)- group in the ring structure include lactonediyl structural units, such as β-propiolactonediyl structural units, γ-butyrolactonediyl structural units, and δ-valerolactonediyl structural units. The structural unit containing a >CH-O-C(=O)-group in the ring structure can be obtained, for example, by intramolecular cyclization of a polymer having a hydroxy group and an ester group with a hydroxy group and an ester group. ">C" in the formula means that the carbon atom C has two bonding hands.

Examples of δ-valerolactonediyl structural units include structural units represented by formula (IV).

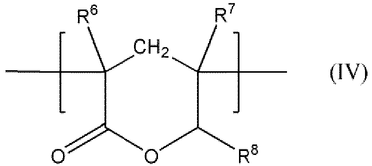

In formula (IV), R⁶, R⁷, and R⁸ are each independently a hydrogen atom or a C₁-C₂₀ organic group, preferably a hydrogen atom or a C₁-C₁₀ organic group, and more preferably a hydrogen atom or a C₁-C₅ organic group. Here, the organic group is not particularly limited as long as the organic group contains 1 to 20 carbon atoms. Examples include linear or branched alkyl groups, linear or branched aryl groups, -OCOCH₃, and -CN. The organic group may contain a heteroatom, such as an oxygen atom. R⁶ and R⁷ are preferably a methyl group, and R⁸ is preferably a hydrogen atom.

The lactone ring unit can be incorporated into the methacrylic copolymer by the method described in JP2000-230016A, JP2001-151814A, JP2002-120326A, JP2002-254544A, JP2005-146084A, or the like, for example, by intramolecular cyclization of a structural unit derived from 2-(hydroxyalkyl)acrylate and a structural unit derived from methyl (meth)acrylate.

In addition to the structural unit (R) etc., the methacrylic copolymer (A) according to the present invention may comprise a glutaric anhydride unit as an additional vinyl monomer unit. The glutaric anhydride unit is a unit having a 2,6-dioxodihydropyrandiyl structure. Examples of the unit having a 2,6-dioxodihydropyrandiyl structure include structural units represented by formula (V).

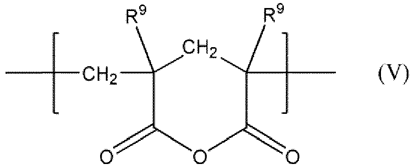

In formula (V), each R⁹ is independently a hydrogen atom or a C₁-C₅ alkyl group, and preferably a methyl group.

The unit having a 2,6-dioxodihydropyrandiyl structure can be incorporated into the methacrylic copolymer by the method described in JP2007-197703A, JP2010-96919A, or the like, for example, by intramolecular cyclization of two adjacent structural units derived from (meth)acrylic acid or intramolecular cyclization of a structural unit derived from (meth)acrylic acid and a structural unit derived from methyl (meth)acrylate.

The additional vinyl monomer units copolymerizable with the methyl methacrylate unit may be used alone or in a combination of two or more.

The proportion of the additional vinyl monomer unit copolymerizable with the methyl methacrylate unit in the methacrylic copolymer (A) according to the present invention is preferably 0 to 20 mass%, more preferably 0 to 15 mass%, and even more preferably 0 to 10 mass%, based on all structural units. If the proportion of the additional vinyl monomer unit copolymerizable with the methyl methacrylate unit in the methacrylic copolymer is more than 20 mass%, heat resistance and rigidity are reduced. The proportion of each monomer unit can be measured, for example, by ¹H-NMR, ¹³C-NMR, or infrared spectrometry.

The methacrylic copolymer (A) according to the present invention has a weight average molecular weight (Mw) of preferably 40,000 to 250,000, more preferably 50,000 to 200,000, and even more preferably 60,000 to 180,000. When the Mw is 40,000 or more, the resin composition of the present invention has excellent impact resistance. When the Mw is 250,000 or less, the resin composition of the present invention has enhanced fluidity, thus resulting in improved molding processability.

The weight average molecular weight (Mw) is a value calculated by converting a chromatogram measured by gel permeation chromatography into the corresponding molecular weight of standard polystyrene.

In the methacrylic copolymer (A) according to the present invention, the lower limit of the glass transition temperature is preferably 130°C, more preferably 135°C, and even more preferably 140°C. The upper limit of the glass transition temperature is not particularly limited and is preferably 170°C.

In the present specification, the glass transition temperature (Tg) is measured in accordance with JIS K 7121. Specifically, a DSC curve is measured under conditions in which the methacrylic copolymer is once heated to 230°C, then cooled to room temperature, and then heated from room temperature to 230°C at a temperature rise rate of 10°C/min. The midpoint determined from the DSC curve measured during the second temperature rise is obtained as the glass transition temperature (Tg).

The methacrylic copolymer (A) according to the present invention preferably has a melt flow rate (referred to below as "MFR") in the range of 1.0 to 30 g/10 min. The lower limit of the MFR is more preferably 1.5 g/10 min or more, and even more preferably 2.0 g/10 min or more. The upper limit of the MFR is more preferably 25 g/10 min or less, and even more preferably 20 g/10 min or less. When the MFR is in the range of 1.0 to 30 g/10 min, hot-melt molding is stably performed in an excellent manner. The MFR as used in the present specification is a value measured at a temperature of 230°C under a load of 3.8 kg with a melt indexer in accordance with JIS K 7210.

The methacrylic copolymer (A) according to the present invention can be obtained, for example, by a method comprising subjecting a copolymer of a starting monomer material containing methyl methacrylate (MMA), α-methylstyrene (αMSt), and styrene (St) or maleic anhydride (Mah) (which may be referred to as a "precursor polymer" in this specification) to a ring-structure-forming reaction.

Specifically, the production method includes the following steps: continuously supplying to a tank reactor a reactant comprising a monomer mixture containing 51 to 98 mass% of methyl methacrylate, 1 to 48 mass% of α-methylstyrene, and 1 to 48 mass% of styrene or maleic anhydride, a radical polymerization initiator, and if necessary, a chain transfer agent; performing bulk polymerization of the monomer mixture in the tank reactor to achieve a polymerization conversion rate of 30 to 60 mass% to obtain a reaction product; removing the monomer mixture in the reaction product to obtain a precursor polymer; and subjecting the obtained precursor polymer to a ring-structure-forming reaction. Each step can be carried out by a known technique.

The precursor polymer is a polymer obtained by polymerization of a reactant comprising a monomer mixture and optionally a radical polymerization initiator and a chain transfer agent. The monomer mixture contains 51 to 98 mass%, and preferably 55 to 95 mass% of methyl methacrylate. The monomer mixture contains 48 to 1 mass%, and preferably 40 to 3 mass% of α-methylstyrene. Furthermore, the monomer mixture contains 48 to 1 mass% of styrene or maleic anhydride.

The polymerization initiator for use is not particularly limited as long as it generates a reactive radical. Examples include peroxide-based initiators, such as diisopropylbenzene hydroperoxide and t-butylhydroperoxide, and azo-based initiators, such as 2,2'-azobis(2-methylpropionitrile).

The polymerization initiator for use preferably has an average uncleaved initiator concentration in the range of 5.1×10 ⁻⁵ to 2.4×10⁻⁴ (mol/L) at the polymerization temperature in the tank reactor described below.

The amount of the polymerization initiator for use is adjusted according to the polymerization temperature, and the polymerization initiator is added to the monomer mixture to achieve the initiator concentration described above.

The chain transfer agent for use is preferably a monofunctional alkyl mercaptan, such as n-octylmercaptan or n-dodecylmercaptan. These chain transfer agents can be used alone or in a combination of two or more. The amount of the chain transfer agent used is preferably 0 to 1 part by mass, more preferably 0.005 to 0.5 parts by mass, and further preferably 0.01 to 0.3 parts by mass, based on 100 parts by mass of the monomer mixture.

The temperature in the tank reactor, i.e., the temperature of the liquid in the reaction tank, is preferably 110 to 145°C, and more preferably 120 to 140°C. From the viewpoint of ease of production of a polymer containing α-methylstyrene and from the viewpoint of heat resistance, the temperature of the liquid in the reaction tank is preferably in the above ranges.

The bulk polymerization in the tank reactor is preferably carried out to achieve a polymerization conversion rate of 30 to 65 mass%, and preferably 35 to 60 mass%.

The average residence time (θ) of the reactant in the tank reactor is preferably 1.5 to 5 hours, more preferably 2 to 4.5 hours, and even more preferably 2.5 to 4 hours. The average residence time (θ) of the reactant in the tank reactor is preferably in the above ranges from the viewpoint of reducing the required amount of the polymerization initiator, from the viewpoint of reducing the amount of the polymerization initiator to make it easier to control the polymerization reaction and control the molecular weight, and from the viewpoint of shortening the time required for the reaction to reach a steady state to thus improve productivity. The average residence time can be adjusted according to the capacity of the tank reactor and the amount of the reactant supplied.

The bulk polymerization is preferably carried out in an inert gas atmosphere such as nitrogen gas.

The production method according to the present invention comprises the step of removing a monomer mixture in the reaction product. The removal method is not particularly limited and is preferably a thermal devolatilization method. After the monomer mixture is removed, the methacrylic copolymer composition can be formed into pellet granules or the like according to a known method in order to facilitate handling as a molding material. The content of the monomer mixture in the obtained resin composition is preferably 1 mass% or less, and more preferably 0.5 mass% or less.

The lower limit of the glass transition temperature of the precursor polymer is preferably 110°C, more preferably 115°C, and even more preferably 120°C. The upper limit is preferably 150°C. The glass transition temperature can be modified by adjusting, for example, the molecular weight and the amount of α-methylstyrene for copolymerization. The higher the glass transition temperature of the precursor polymer, the higher the heat resistance. The methacrylic copolymer (A) obtained by using a precursor polymer with a high glass transition temperature has high heat resistance even when a small amount of the structural unit (R) is used; thus, fluidity is less likely to be reduced.

The precursor polymer is not particularly limited as long as the total content of the structural units derived from methyl methacrylate is 50 to 98 mass%, the total content of the structural units derived from α-methylstyrene is 48 to 1 mass%, and the total content of the structural units derived from styrene or maleic anhydride is 48 to 1 mass%. From the viewpoint of polymerizability, transparency, etc., the total content of the structural units derived from methyl methacrylate in the methacrylic copolymer (A) is preferably 50 mass% or more and 98 mass% or less, more preferably 55 mass% or more and 95 mass% or less, and most preferably 60 mass% or more and 90 mass% or less.

From the viewpoint of heat resistance, polymerizability, water absorption rate, etc., the total content of the structural units derived from α-methylstyrene in the precursor polymer is preferably 1 mass% or more and 48 mass% or less, more preferably 3 mass% or more and 40 mass% or less. From the viewpoint of obtaining the methacrylic copolymer (A) with sufficient heat resistance and from the viewpoint of polymerizability, the structural units derived from α-methylstyrene are preferably in the above ranges.

From the viewpoint of heat resistance, fluidity, thermal stability, etc., the total content of the structural units derived from styrene or maleic anhydride in the precursor polymer is preferably 1 mass% or more and 48 mass% or less, and more preferably 3 mass% or more and 40 mass% or less. From the viewpoint of improving the polymerization rate, improving thermal decomposition resistance, and improving heat resistance of the methacrylic copolymer (A), the structural units derived from styrene or maleic anhydride are preferably in the above ranges.

The precursor polymer has a weight average molecular weight Mw, in terms of polystyrene, of preferably 30,000 or more and 200,000 or less, more preferably 40,000 or more and 180,000 or less, and even more preferably 50,000 or more and 160,000 or less, in a chromatogram obtained by gel permeation chromatography. From the viewpoint of preventing the obtained molded article from becoming brittle and from the viewpoint of productivity, the weight average molecular weight Mw is preferably in the above ranges. The Mw can be controlled by adjusting the types, amounts, timing of addition, etc. of the polymerization initiator and/or chain transfer agent (optional components) used in the production of the precursor polymer.

The ring-structure-forming reaction can be performed, for example, using an extruder. Examples of the extruder include single-screw extruders, twin-screw extruders, and multi-screw extruders. Twin-screw extruders are preferred from the viewpoint of mixing performance. Examples of twin-screw extruders include non-intermeshing co-rotating extruders, intermeshing co-rotating extruders, non-intermeshing counter-rotating extruders, and intermeshing counter-rotating extruders. The intermeshing co-rotating extruder is preferable because high-speed rotation is possible and mixing can be efficiently promoted. These extruders may be used alone or connected in series.

In the ring-structure-forming reaction using an extruder, for example, the precursor polymer as a starting material is fed from a starting material feeding section of the extruder. After the precursor polymer is melted to fill the inside of a cylinder, an imidizing agent (optional component) and the like can be injected into the extruder using an addition pump to allow a ring-structure-forming reaction to proceed in the extruder. When an imidizing agent is used, the structural unit (R) comprises an N-substituted or unsubstituted glutarimide unit and, if necessary, may comprise an N-substituted or unsubstituted maleimide unit, a lactone ring unit and/or a glutaric anhydride unit. The imidizing agent is used in an amount of 1.6 to 30 parts by mass, preferably 2.0 to 20 parts by mass, based on 100 parts by mass of the methacrylic copolymer. When the imidizing agent is used in an amount in the above ranges, by-production of a methacrylamide unit can be suppressed.

The resin temperature in the reaction zone in the extruder is preferably set in the range of 180 to 300°C, more preferably 200 to 280°C. The resin temperature in the reaction zone is preferably in the above ranges from the viewpoint of suppressing a decrease in the reaction efficiency of the ring-structure-forming reaction, suppressing a decrease in heat resistance of the methacrylic copolymer due to by-production of a methacrylamide unit, and suppressing a decrease in the mechanical strength of a molded article comprising the methacrylic copolymer (A) obtained by suppressing the decomposition of the resin. Note that the reaction zone in the extruder refers to a region from an injection position for injecting an imidizing agent or the like to a resin discharge port (die portion) in the cylinder of the extruder.

The ring-structure-forming reaction can be allowed to further proceed by increasing the reaction time in the reaction zone of the extruder. The reaction time in the reaction zone of the extruder is preferably longer than 10 seconds, more preferably longer than 30 seconds. When the reaction time is 10 seconds or shorter, the ring-structure-forming reaction may hardly proceed.

The resin pressure in the extruder is preferably in the range of atmospheric pressure to 50 MPa, and more preferably in the range of 1 to 30 MPa. Considering the limit of the mechanical pressure resistance of a typical extruder, the resin pressure in the extruder is preferably in the above ranges (particularly the upper limit value or less) from the viewpoint of eliminating the need for special equipment and reducing costs.

It is preferable to use an extruder having a vent hole capable of reducing the pressure to atmospheric pressure or lower. With this configuration, unreacted materials, by-products, such as methanol, and/or monomers can be removed, and the breaking strength of the molded article comprising the resin composition of present invention tends to improve.

For the ring-structure-forming reaction, in place of an extruder, a reactor for high viscosity, for example, a horizontal twin-screw reaction apparatus, such as a Vyborac produced by Sumitomo Heavy Industries, Ltd., or a vertical twin-screw stirring tank, such as a Super Blend, can also be suitably used.

During the ring-structure-forming reaction, a carboxyl group may be by-produced in the methacrylic copolymer. The carboxy group may be converted into an ester group by an esterifying agent, a catalyst, etc., if necessary. This can reduce foaming of the resin during the production of an optical film. The ester group may vary depending on the esterifying agent and/or catalyst used, and preferably contains a methyl methacrylate unit and more preferably contains both a methyl methacrylate unit and an ethyl methacrylate unit from the viewpoint of reduction in resin melt viscosity during melt molding, reactivity of esterification, and heat resistance of the resin after esterification.

The esterifying agent is preferably dimethyl carbonate from the viewpoint of cost, reactivity, etc.

The amount of the esterifying agent can be, for example, set so that the methacrylic copolymer has a desired acid value.

In addition to the esterifying agent, a catalyst can be used together. The type of catalyst is not particularly limited, and examples include amine compounds, such as trimethylamine, triethylamine, monomethyldiethylamine, dimethylmonoethylamine, and dimethylbenzylamine. Among these, triethylamine is preferable from the viewpoint of cost, reactivity, etc.

### Styrene Resin (B)

The content of the styrene resin (B) in the resin composition of the present invention is in the range of 51 to 95 mass%, preferably 55 to 90 mass%, and more preferably 60 to 85 mass%. The resin composition of the present invention has excellent impact resistance when the content of the styrene resin (B) is 51 mass% or more, and has improved heat resistance and surface hardness when the content is 95 mass% or less.

The styrene resin (B) according to the present invention is selected from the group consisting of ABS (acrylonitrile-butadiene-styrene) resins, AES (acrylonitrile-EPDM-styrene) resins, ASA (acrylate-styrene-acrylonitrile) resins, and AS (acrylonitrile-styrene) resins. These resins may be used alone or in a combination of two or more.

ABS resin, AES resin, and ASA resin are graft copolymers in which at least a styrene monomer and an acrylonitrile monomer are graft-copolymerized onto a rubbery polymer. For example, ABS resin is obtained by using a butadiene-based rubber, such as polybutadiene or a styrene-butadiene copolymer, as a rubbery polymer; AES resin is obtained by using an ethylene-based rubber, such as an ethylene-α-olefin copolymer, as a rubbery polymer; and ASA resin is obtained by using an acrylic rubber, such as butyl acrylate or ethyl acrylate, as a rubbery polymer. Two or more types of these rubbery polymers may also be used in graft copolymerization.

The glass transition temperature of a rubber copolymer is preferably 0°C or lower, more preferably -50°C or lower, and even more preferably -70°C or lower. The glass transition temperature can be measured by DSC.

The mass average particle size of the rubber copolymer is not particularly limited, and is preferably 0.1 to 0.35 µm, more preferably 0.12 to 0.33 µm, and even more preferably 0.15 to 0.3 µm. When the mass average particle size is 0.1 µm or more, impact resistance is further improved. When the mass average particle size is 0.35 µm or less, the design properties, such as jet blackness, are further improved, and the occurrence of white haze is further suppressed. The mass average particle size can be measured by observing the rubber copolymer under a transmission electron microscope.

The polymer to be grafted onto the rubber copolymer is not particularly limited. Examples include acrylonitrile-styrene copolymers, acrylonitrile-α-methylstyrene copolymers, acrylonitrile-styrene-butyl acrylate copolymers, acrylonitrile-styrene-methyl methacrylate copolymers, and acrylonitrile-styrene-N-phenylmaleimide copolymers. Among these, acrylonitrile-styrene copolymers, acrylonitrile-styrene-butyl acrylate copolymers, and acrylonitrile-styrene-methyl methacrylate copolymers are preferred.

The method for producing a graft copolymer, such as an ABS resin, may be a known method. Examples include a production method by emulsion polymerization and/or continuous bulk polymerization. Specific examples include an emulsion graft polymerization method in which a copolymer is graft-polymerized onto a latex of a rubber component produced by emulsion polymerization.

AS resin is a copolymer having a styrene monomer unit and an acrylonitrile monomer unit, and is, for example, a styrene-acrylonitrile copolymer.

Examples of other copolymerizable monomers usable for AS resin include (meth)acrylate monomers, such as methyl methacrylate; acrylate monomers, such as butyl acrylate and ethyl acrylate; (meth)acrylic acid monomers, such as methacrylic acid; acrylic acid monomers, such as acrylic acid; and N-substituted maleimide monomers, such as N-phenylmaleimide.

The structural units of AS resin are preferably such that a styrene monomer unit is 60 to 90 mass% and a vinyl cyanide monomer unit is 10 to 40 mass%, and more preferably such that a styrene monomer unit is 65 to 80 mass% and a vinyl cyanide monomer unit is 20 to 35 mass%. When the structural units are in the above ranges, the obtained resin composition has well-balanced impact strength and fluidity. The values of the styrene monomer unit and the vinyl cyanide monomer unit are measured by ¹³C-NMR.

The production method for an AS resin may be a known method. For example, bulk polymerization, solution polymerization, suspension polymerization, emulsion polymerization, or the like may be used for production. The reactor may be operated in a continuous, batch, or semi-batch manner.

The styrene resin (B) according to the present invention is not particularly limited as long as the above ranges are satisfied. Preferred are ABS resins, AES resins, and ASA resins because they contain a rubber copolymer and thus provide excellent impact resistance. AES resins and ASA resins are more preferred to achieve excellent weather resistance because they contain fewer double-bond components in the rubber copolymer. ASA resins are particularly preferred because a reduction in impact resistance of acrylic rubber is suppressed when a methacrylic copolymer is added, and excellent impact resistance of the resin composition of the present invention is obtained.

### Methacrylic Resin (C)

The resin composition of the present invention may or may not further comprise a methacrylic resin (C), in addition to the methacrylic copolymer (A) and the styrene resin (B). Therefore, in the present invention, the phrase "the resin composition comprising 0 to 30 parts by mass of a methacrylic resin (C)" may also include a resin composition that does not comprise a methacrylic resin (C). The content of the methacrylic resin (C) in the resin composition of the present invention is in the range of 0 to 30 mass%, preferably 3 to 20 mass%, and more preferably 5 to 15 mass%. In this embodiment, the resin composition of the present invention has excellent surface hardness, surface glossiness, and fluidity by comprising the methacrylic resin (C).

In the present invention, the methacrylic resin (C) is intended to refer to a methacrylic resin other than the methacrylic copolymer (A) described above. In one embodiment, the methacrylic resin (C) according to the present invention has a proportion of the structural unit derived from a methacrylic ester of, for example, 80 mass% or more, preferably 90 mass% or more, more preferably 95 mass% or more, and even more preferably 99 mass% or more. Examples of methacrylic esters include methyl methacrylate, ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, 2-ethylhexyl methacrylate, pentadecyl methacrylate, dodecyl methacrylate; phenyl methacrylate, benzyl methacrylate, phenoxyethyl methacrylate, 2-hydroxyethyl methacrylate, 2-ethoxyethyl methacrylate, glycidyl methacrylate, allyl methacrylate; cyclohexyl methacrylate, norbornenyl methacrylate, and isobornyl methacrylate, with methyl methacrylate being preferred. These methacrylic esters may be used alone or in a combination of two or more. Further, the methacrylic resin (C) may contain a structural unit derived from a monomer other than methacrylic esters. Such other monomer is preferably an acrylic ester. The content of the structural unit derived from an acrylic ester in the methacrylic resin (C) is preferably 20 mass% or less, more preferably 10 mass% or less, even more preferably 5 mass% or less, and most preferably 1.0 mass% or less.

Examples of such acrylic esters include methyl acrylate ("MA" below), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. From the viewpoint of availability, MA, ethyl acrylate, n-propyl acrylate, isopropyl acrylate, n-butyl acrylate, isobutyl acrylate, and tert-butyl acrylate are preferable, MA and ethyl acrylate are more preferable, and MA is most preferable. These acrylic esters may be used alone or in a combination of two or more.

The methacrylic resin (C) according to the present invention can be obtained by polymerizing the above methacrylic ester and one or more other optional monomers. For the polymerization performed by using two or more monomers, a monomer mixture is typically prepared by mixing the two or more monomers, and the monomer mixture is subjected to polymerization. The polymerization method is not particularly limited. From the viewpoint of productivity, radical polymerization is preferably performed according to a method such as bulk polymerization, suspension polymerization, solution polymerization, or emulsion polymerization.

The methacrylic resin (C) according to the present invention preferably has a weight average molecular weight ("Mw" below) of 40,000 to 400,000, more preferably 45,000 to 200,000, and still more preferably 50,000 to 150,000. When the Mw is 40,000 or more, the resin composition of the present invention becomes excellent in mechanical strength. When the Mw is 400,000 or less, the resin composition of the present invention becomes excellent in fluidity with enhanced molding processability.

The glass transition temperature of the methacrylic resin (C) according to the present invention is preferably 100°C or higher, more preferably 103°C or higher, and still more preferably 105°C or higher. Due to a glass transition temperature of 100°C or higher, the resin composition of the present invention is excellent in heat resistance. The term "glass transition temperature" in the present specification refers to a temperature determined based on measurement at a heating rate of 10°C/min with a differential scanning calorimeter and calculation according to the midpoint method.

The melt flow rate ("MFR" below) of the methacrylic resin (C) according to the present invention is preferably in the range of 1 to 30 g/10 min. The lower limit of the MFR is more preferably 1.2 g/10 min or more, and still more preferably 1.5 g/10 min. The upper limit of the MFR is more preferably 25 g/10 min or less, and still more preferably 22 g/10 min or less. An MFR within the range of 1 to 30 g/10 min makes hot-melt molding stable. The term "MFR" in the present specification refers to a value measured at a temperature of 230°C under a load of 3.8 kg with a melt indexer in accordance with JIS K 7210.

### Resin Composition

The resin composition of the present invention has a mass ratio of methacrylic copolymer (A)/styrene resin (B) of 5/95 to 49/51, preferably 10/90 to 45/55, more preferably 15/85 to 40/60, and even more preferably 20/80 to 30/70 from the viewpoint of heat resistance, surface hardness, fluidity, and impact resistance.

The resin composition of the present invention may comprise a filler as necessary as long as the effects of the present invention are not impaired. Examples of fillers include calcium carbonate, talc, carbon black, titanium oxide, silica, clay, barium sulfate, and magnesium carbonate. The amount of the filler to be contained in the resin composition of the present invention is preferably 3 mass% or less, and more preferably 1.5 mass% or less.

The resin composition of the present invention may comprise other polymers as long as the effects of the present invention are not impaired. Examples of other polymers include polyolefin resins, such as polyethylene, polypropylene, polybutene-1, poly-4-methylpentene-1, and polynorbornene; ethylene ionomers; styrene resins other than those listed as the styrene resin (B), such as polystyrene, styrene-maleic anhydride copolymers, high-impact polystyrene, MBS resin, and SAS resin; methyl methacrylate-styrene copolymers; polyester resins, such as polyethylene terephthalate and polybutylene terephthalate; polyamides, such as nylon 6, nylon 66, and polyamide elastomers; polyvinyl chloride, polyvinylidene chloride, polyvinyl alcohol, ethylene-vinyl alcohol copolymers, polyacetal, polyvinylidene fluoride, polyurethane, phenoxy resins, modified polyphenylene ether, polyphenylene sulfide, silicone-modified resins; silicone rubbers; acrylic multilayer copolymer elastomers; acrylic thermoplastic elastomers, such as diblock copolymers and triblock copolymers of a methyl methacrylate polymer block-n-butyl acrylate polymer block; styrene thermoplastic elastomers, such as SEPS, SEBS, and SIS; and olefin rubbers, such as IR, EPR, and EPDM. The amount of such other polymers that can be contained in the methacrylic resin composition of the present invention is preferably 10 mass% or less, more preferably 5 mass% or less, and most preferably 0 mass%.

The resin composition of the present invention may contain additives, such as an antioxidant, a thermal degradation inhibitor, an UV absorber, a light stabilizer, a lubricant, a mold release agent, a polymer processing aid, an antistatic agent, a flame retardant, a pigment, a light diffuser, an organic dye, a delusterant, and a phosphor, as long as the effects of the present invention are not impaired.

An antioxidant alone has an effect of preventing oxidative deterioration of resin in the presence of oxygen. Examples include phosphorus antioxidants, hindered phenolic antioxidants, and thioether antioxidants. These antioxidants may be used alone or in a combination of two or more. Of these, phosphorus antioxidants, hindered phenolic antioxidants, and the like are preferable, and a combination of a phosphorus antioxidant and a hindered phenolic antioxidant is more preferable, from the viewpoint of the effect of preventing deterioration of optical properties due to coloration. The ratio of a phosphorus antioxidant to a hindered phenolic antioxidant used in combination is preferably, but not limited to, in the range of 1/5 to 2/1, and more preferably in the range of 1/2 to 1/1 in terms of the phosphorus antioxidant/the hindered phenolic antioxidant in ratio by mass.

Examples of phosphorus antioxidants include 2,2-methylenebis(4,6-di-t-butylphenyl)octyl-phosphite (trade name: ADK STAB HP-10, produced by Adeka Corporation), tris(2,4-di-t-butylphenyl)phosphite (trade name: Irgafos 168, produced by Ciba Specialty Chemicals), and 3,9-bis(2,6-di-tert-butyl-4-methylphenoxy)-2,4,8,10-tetraoxa-3,9-diphosphaspiro[5.5]undecane (trade name: ADK STAB PEP-36, produced by Adeka Corporation).

Examples of hindered phenolic antioxidants include pentaerythrityl-tetrakis[3-(3,5-di-t-butyl-4-hydroxyphenyl)propionate] (trade name: Irganox 1010, produced by Ciba Specialty Chemicals) and octadecyl-3-(3,5-di-t-butyl-4-hydroxyphenyl)propionate (trade name: Irganox 1076, produced by Ciba Specialty Chemicals).

Thermal degradation inhibitors are compounds that can prevent thermal degradation of resin by trapping polymer radicals generated upon exposure to high heat in a substantially oxygen-free state. Examples of thermal degradation inhibitors include 2-t-butyl-6-(3' -t-butyl-5' -methyl-hydroxybenzyl)-4-methylphenyl acrylate (trade name: Sumilizer GM, produced by Sumitomo Chemical Co., Ltd.), 2,4-di-t-amyl-6-(3' ,5' -di-t-amyl-2'-hydroxy-α-methylbenzyl)phenyl acrylate (trade name: Sumilizer GS, produced by Sumitomo Chemical Co., Ltd.), 4-t-butyl-2-(5-t-butyl-2-oxo-3H-benzofuran-3-yl)phenyl-3,5-di-t-butyl-4-hydroxybenzoate (trade name: Revonox 501, produced by Chitec Technology Co., Ltd.), 5,7-di-t-butyl-3-(3,4-di-methyl-phenyl)-3H-benzofuran-2-one, and 5,7-di-t-butyl-3-(3,4-di-propyl-phenyl)-3H-benzofuran-2-one (trade name: HP-136, produced by BASF).

UV absorbers are compounds having the ability to absorb ultraviolet rays. UV absorbers are compounds that are said to have the function of mainly converting light energy into heat energy.

Examples of UV absorbers include benzophenones, benzotriazoles, triazines, benzoates, salicylates, cyanoacrylates, oxalic anilides, malonic esters, and formamidines. These may be used alone or in a combination of two or more. Of these, benzotriazoles, triazines, or UV absorbers having a maximum value εₘₐₓ of the molar absorbance coefficient of 1200 dm³·mol⁻¹ cm⁻¹ or less at a wavelength of 380 to 450 nm are preferable.

Light stabilizers are compounds that are said to have the function of mainly capturing radicals that are formed due to oxidation by light, and examples include hindered amines, such as compounds having a 2,2,6,6-tetraalkylpiperidine skeleton.

Examples of lubricants include stearic acid, behenic acid, stearic acid amide, methylene bisstearamide, hydroxystearic acid triglyceride, paraffin wax, ketone wax, octyl alcohol, and hydrogenated oil.

Mold release agents are compounds with the function of facilitating the release of a molded article from a mold. Examples include higher alcohol, such as cetyl alcohol and stearyl alcohol; and glycerin esters of higher fatty acid, such as stearic acid monoglyceride and stearic acid diglyceride. The mold release agent for use is preferably higher alcohols because a glycerin ester of higher fatty acid may cause the formation of gelled foreign matter.

Polymer processing aids are compounds that are effective in achieving thickness accuracy and thinness of the obtained film when an acrylic resin composition is molded. Polymer processing aids can typically be produced by performing emulsion polymerization. Polymer processing aids are preferably polymer particles with a particle size of 0.05 to 0.5 µm.

The polymer particles may be single-layer particles comprising a polymer with a single composition ratio and a single intrinsic viscosity, or may be multilayer particles comprising two or more polymers that are different in composition ratio or intrinsic viscosity. Among them, preferred are particles having a two-layered structure composed of a polymer layer with a low intrinsic viscosity as an inner layer and a polymer layer with a high intrinsic viscosity of 5 dl/g or more as an outer layer. The polymer processing aid preferably has an intrinsic viscosity of 3 to 6 dl/g. The intrinsic viscosity is preferably in the above range from the viewpoint of obtaining a high effect of improving moldability and from the viewpoint of avoiding a decrease in melt fluidity of the resin composition.

Examples of antistatic agents include alkylsulfonates, such as sodium heptylsulfonate, sodium octylsulfonate, sodium nonylsulfonate, sodium decylsulfonate, sodium dodecylsulfonate, sodium cetylsulfonate, sodium octadecylsulfonate, sodium diheptylsulfonate, potassium heptylsulfonate, potassium octylsulfonate, potassium nonylsulfonate, potassium decylsulfonate, potassium dodecylsulfonate, potassium cetylsulfonate, potassium octadecylsulfonate, potassium diheptylsulfonate, lithium heptylsulfonate, lithium octylsulfonate, lithium nonylsulfonate, lithium decylsulfonate, lithium dodecylsulfonate, lithium cetylsulfonate, lithium octadecylsulfonate, and lithium diheptylsulfonate.

Examples of flame retardants include magnesium hydroxide, aluminum hydroxide, hydrated aluminum silicate, hydrated magnesium silicate, metal hydrates with hydroxy groups or water of crystallization, such as hydrotalcite, phosphoric compounds, such as amine polyphosphate and phosphate, and silicon compounds. Phosphate flame retardants such as the following are preferred: trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, dimethylethyl phosphate, methyl dibutyl phosphate, ethyl dipropyl phosphate, and hydroxyphenyl diphenyl phosphate.

Examples of dyes or pigments include organic red pigments, such as para red, fire red, pyrazolone red, thioindigo red, and perylene red; organic blue pigments, such as cyanine blue and indanthrene blue; organic green pigments, such as cyanine green and naphthol green; and black pigments, such as carbon black. Black pigments, such as carbon black, are preferable. One or more of these may be used.

Organic dyes that can be preferably used are compounds having the function of converting ultraviolet rays into visible rays.

Examples of light diffusers and delusterants include glass particles, polysiloxane crosslinked particles, crosslinked polymer particles, talc, calcium carbonate, and barium sulfate.

Examples of phosphors include fluorescent pigments, fluorescent dyes, fluorescent whitening dyes, fluorescent brightening agents, and fluorescent bleaching agents.

These additives may be used alone or in a combination of two or more. These additives may be added to the polymerization reaction liquid during the production of the methacrylic copolymer (A) or the styrene resin (B), may be added to the produced methacrylic copolymer (A) and/or styrene resin (B), or may be added during the preparation of the resin composition of the present invention. The total amount of the additives contained in the resin composition of the present invention is preferably 7 mass% or less, more preferably 5 mass% or less, and still more preferably 4 mass% or less of the resin composition from the viewpoint of preventing poor appearance of a molded article.

The resin composition of the present invention has a Vicat softening temperature of preferably 105°C to 140°C, more preferably 108°C to 135°C, and even more preferably 110°C to 130°C as measured by a method described in the B50 method in JIS K 7206.

The method for preparing the resin composition of the present invention is not particularly limited. For example, a method of melt-kneading the methacrylic copolymer (A) and the styrene resin (B) may be used. During melt-kneading, other polymers, additives, and the like may be mixed, if necessary, the methacrylic copolymer (A) may be first mixed with other polymers and additives and then mixed with the styrene resin (B), the styrene resin (B) may be first mixed with other polymers and additives and then mixed with the methacrylic copolymer (A), or other methods may be used. Kneading can be performed with a known mixing apparatus or kneading apparatus such as a kneader-ruder, an extruder, a mixing roll, or a Banbury mixer. Of these, a twin-screw extruder is preferred.

The resin composition of the present invention may be prepared in the form of pellets or the like for increasing convenience during storage, transportation, or molding.

### Molded Article

The molded article of the present invention comprises the resin composition of the present invention. The method for producing the molded article of the present invention is not particularly limited. Examples include melt molding methods, such as a T-die method (a lamination method, a coextrusion method, etc.), inflation method (a coextrusion method etc.), a compression molding method, a blow molding method, a calender molding method, a vacuum molding method, an injection molding method (an insert method, a double molding method, a press method, a core-back method, a sandwich method, etc.), and a solution casting method. In melt molding, a resin composition is typically heated to 200 to 280°C and then subjected to processing. The heating temperature is preferably 210 to 270°C. The heating is preferably performed to a temperature equal to or higher than the above lower limit to sufficiently perform devolatilization in a relatively short time. By sufficiently performing devolatilization, appearance defects, such as silver marks, can be prevented from being formed on the molded article. In order to avoid appearance defects, such as burning and silver marks due to thermal decomposition, heating is preferably performed to a temperature equal to or lower than the above upper limit. While having high heat resistance, the resin composition of the present invention also has excellent fluidity; thus, shear heat generation during molding is suppressed, and the occurrence of appearance defects is suppressed in the molded article.

The resin composition and the molded article comprising the resin composition of the present invention can be used for components for various applications. Specific examples of applications include furniture, household goods, storage and emergency supplies, building materials, such as walls and roofs, toys and playground equipment, gaming applications, such as face plates for pinball games, medical and welfare products, office automation equipment, audio-visual equipment, batteries and electrical equipment, lighting equipment, body parts for ship and aircraft structures, and automotive interior and exterior parts. In particular, the resin composition and the molded article of the present invention can be suitably used for, for example, vehicle applications, such as body parts and interior and exterior parts; optical applications; and electrical and electronic applications. Examples of the optical applications include various lenses and touch panels, as well as transparent substrates etc. used for solar cells.

In addition, the resin composition and the molded article of the present invention can also be used for, for example, waveguides, optical fibers, covering materials for optical fibers, LED lenses, lens covers for EL lighting etc., and other covers in the fields of optical communication systems, optical switching systems, and optical measurement systems.

Examples of the electrical and electronic applications include display devices (e.g., personal computers, game consoles, televisions, car navigation systems, electronic paper, mobile phones, and tablet devices), printers, copy machines, scanners, dryer vents, electric kettle parts, fax machines, electronic organizers, electronic desk calculators, electronic dictionaries, cameras, video cameras, battery packs, recording medium driving devices, recording medium reading devices, computer mice, digital keypads, CD players, MD players, and portable radios and audio players. In particular, the resin composition and the molded article of the present invention can be suitably used for design parts of the housings of televisions, personal computers, car navigation systems, electronic paper, mobile phones, tablet devices, and the like.

For vehicle applications, the resin composition and the molded article of the present invention can be suitably used for automobile interior parts, such as automobile side visors, rear visors, head wings, headlight covers, instrument panel peripheral parts, air conditioner outlets, dashboards, and console boxes, and automobile exterior parts, such as mirror housings, spoilers, pillar garnishes, wheel caps, rear lamp housings, bumpers, front grilles, rear grilles, and license plate garnishes.

### Examples

The present invention will be described in more detail with reference to Examples. However, the present invention is not limited to the Examples.

Physical properties etc. were measured according to the following methods.

### Polymerization Conversion Rate

A column, InertCap 1 (df = 0.4 µm, 0.25 mm I. D. × 60 m; produced by GL Sciences Inc.), was connected to a GC-14A gas chromatograph (produced by Shimadzu Corporation) to perform analysis under the following conditions, and calculation was performed based on the analysis.

Injection temperature = 250°C
Detector temperature = 250°C
Temperature conditions: the temperature is kept at 60°C for 5 minutes, raised at 10°C/min to 250°C, and then kept at 250°C for 10 minutes

### Unit Composition of Precursor Polymer

The carbon ratio of the phenyl group in the α-methylstyrene unit, the carbonyl group in the methyl methacrylate unit, the phenyl group in the styrene unit, and the carbonyl group in the maleic anhydride unit was determined by ¹³C NMR, and the unit composition was calculated based on the carbon ratio.

### Weight Average Molecular Weight

A sample solution was prepared by dissolving 4 mg of the resin subjected to measurement in 5 ml of tetrahydrofuran. The temperature of the column oven was set to 40°C, and 20 µl of the sample solution was injected into an apparatus at an eluent flow rate of 0.35 ml/min to obtain the chromatogram by GPC (gel permeation chromatography). Ten polystyrene standards each having a different molecular weight in the range of 400 to 5,000,000 were measured by GPC, and a calibration curve showing the relationship between the retention time and the molecular weight was prepared. The Mw of the resin subjected to measurement was determined according to this calibration curve.

Apparatus: HLC-8320 GPC apparatus produced by Tosoh Corporation
Separation column: serially connected TSK guard column Super HZ-H, TSKgel HZM-M, and TSKgel Super HZ4000 produced by Tosoh Corporation
Eluent: tetrahydrofuran
Eluent flow rate: 0.35 mL/min
Column temperature: 40°C
Detection method: differential refractive index (RI)

### Unit Composition of Methacrylic Copolymer

The α-methylstyrene unit and the styrene unit had the same composition as each unit composition of the precursor polymer.

The methacrylic copolymer was subjected to ¹H-NMR measurement using a ¹H-NMR (trade name: UltraShield 400 Plus, produced by Bruker Corporation) to determine the content (mol%) of each monomer unit in the methacrylic copolymer, such as the imide (glutarimide and maleimide) unit, methyl methacrylate unit, and aromatic vinyl (α-methylstyrene and styrene) unit, and the content in mol% was converted into the content in wt% based on the molecular weight of each monomer unit. Further, the imidization rate (Rₘ) of maleic anhydride was determined using an infrared spectrophotometer from the absorption intensity of the peak at about 1700 cm⁻¹ derived from the carbonyl unit of maleimide and the absorption intensity of the peak at about 1780 cm⁻¹ derived from the carbonyl of maleic anhydride. The maleic anhydride amount (M) in the methacrylic copolymer was calculated according to the formula below, using the maleic anhydride amount (m) of the precursor polymer determined by ¹³C-NMR and the imidization rate (Rₘ).

### Maleic Anhydride Amount (M) = m×(100-Rm)/100

Furthermore, using an infrared spectrophotometer, the ratio of the glutarimide unit to maleimide unit in the methacrylic copolymer was determined from the absorption intensity of the peak at about 1685 cm⁻¹ derived from the carbonyl of glutarimide and the absorption intensity of the peak at about 1700 cm⁻¹ derived from the carbonyl unit of maleimide. The content of the glutarimide unit and the content of the maleimide unit in the methacrylic copolymer were determined from the amount of the imide unit in the methacrylic copolymer determined by ¹H-NMR and the ratio of the glutarimide unit to maleimide unit.

### Glass Transition Temperature; Tg

The resins obtained in Production Examples were dissolved in chloroform and reprecipitated with methanol, and the precipitated resins were then vacuum-dried at 100°C for 12 hours or more. A DSC curve was measured with a differential scanning calorimeter (model number: DSC-50, produced by Shimadzu Corporation) in accordance with JIS K 7121 under conditions in which the vacuum-dried resins were heated once to 250°C and then cooled to room temperature, and then heated from room temperature to 200°C at 10°C/min. The glass transition temperature at the midpoint determined from the DSC curve, measured at the time of the second temperature rise, was defined as the glass transition temperature in the present invention.

### Melt Flow Rate; MFR

The resins obtained in Production Examples were dissolved in chloroform and reprecipitated with methanol, and the precipitated resins were then vacuum-dried at 100°C for 12 hours or more. The vacuum-dried resins were measured at 230°C under a load of 3.8 kg in accordance with JIS K 7210.

### Flexural Modulus

The resins obtained in Production Examples, Examples, and Comparative Examples were press-molded and then cut to obtain test pieces having a thickness of 4 mm, a length of 80 mm, and a width of 10 mm. Each test piece was subjected to three-point bending at 23°C using an autograph (produced by Shimadzu Corporation) in accordance with the method described in JIS K 7171 to measure the flexural modulus (MPa).

### Charpy Impact Strength

The resins obtained in Production Examples, Examples, and Comparative Examples were press-molded and then cut to obtain test pieces having a thickness of 4 mm, a length of 80 mm, and a width of 10 mm. Each test piece was measured under conditions of 23°C and a relative humidity of 50% in accordance with the method described in JIS K 7111. The measurement under test conditions with notch was performed in accordance with JIS K 7111-1/1eA. The measurement under test conditions without notch was performed in accordance with JIS K 7111-1/1eU. "N.B." stands for not brake. The measurement was carried out ten times, and the average value was used as the Charpy impact value.

### Surface Hardness

The resins obtained in Examples and Comparative Examples were press-molded to obtain test pieces having a thickness of 3 mm, a length of 200 mm, and a width of 100 mm. The pencil hardness of each test piece was measured under a load of 0.75 kg in accordance with JIS K 5600-5-4.

### Vicat Softening Temperature

The resins obtained in Examples and Comparative Examples were press-molded and then cut to obtain test pieces having a thickness of 4 mm, a length of 80 mm, and a width of 10 mm. The Vicat softening temperature of each test piece was measured with a 3M-2 HDT tester produced by Toyo Seiki Seisakusho, Ltd., in accordance with a method described in the B50 method in JIS K 7206.

### Injection Moldability

The resins obtained in Examples and Comparative Examples were subjected to 200 shots of injection molding in a flat mold (steel material: NAK80, molded product size: 40 mm × 200 mm × 2 mm) with an injection molder (M-100C, produced by Meiki Co., Ltd.) at a cylinder temperature of 250°C and a mold temperature of 50°C without holding the pressure (short shot). After the completion of molding, the degree of contamination on the surface of the mold was visually observed and evaluated according to the following index.

### Evaluation Index for Mold Contamination

A: No mold contamination or slight mold contamination was observed.
B: Considerable mold contamination was observed.

The resins obtained in Examples and Comparative Examples were injection-molded with an injection molder (M-100C, produced by Meiki Co., Ltd.) at a cylinder temperature of 270°C, a mold temperature of 55°C, and a molding cycle of 1 minute, thereby producing flat plates having a length of 205 mm, a width of 160 mm, and a thickness of 0.5 mm. The ratio of resin flow length (190 mm) to thickness was 380.

The appearance of the flat plates was visually observed. Moldability was evaluated based on whether the flat plates had molding defects such as sink marks due to insufficient fluidity and silver streaks due to insufficient thermal decomposition resistance.

### Evaluation Index for Moldability

A: No sink marks or silver streaks were observed.
B: Sink marks or silver streaks were observed.

The injection moldability was evaluated based on the evaluation results of mold contamination and moldability.

### Evaluation Index for Injection Moldability

A: The evaluation indexes of both mold contamination and moldability were A.
B: The evaluation index of either mold contamination or moldability was A.
C: The evaluation indexes of both mold contamination and moldability were B.

### Glossiness

The resins obtained in Examples and Comparative Examples were injection-molded with an injection molder (M-100C, produced by Meiki Co., Ltd.) under conditions of a cylinder temperature of 240 to 260°C and a mold temperature of 80°C to obtain test pieces. The appearance of the test pieces was visually evaluated, and the glossiness of the surface of the test pieces was measured. Then, evaluation was performed according to the following index.
A: Glossiness was observed (visually evaluated as glossy, or having a gloss value of 70 or more).
B: No glossiness was observed (visually evaluated as not glossy, or having a gloss value of less than 70).
Glossiness measurement: Measurement was performed using an appearance analyzer (Rhopoint IQ-S, produced by Konica Minolta, Inc.) at a measurement angle of 60° in accordance with JIS Z 8741.

### List of Materials

The following materials were used for the methacrylic copolymer (A), maleimide-based heat-resistance agent, styrene resin (B), and methacrylic resin (C) according to the present invention.
- Methacrylic copolymer (A-7): Delpet PM120N, produced by Asahi Kasei Corporation
   (MMA copolymerization ratio = 86%, styrene copolymerization ratio = 7%, N-phenylmaleimide copolymerization ratio = 7%, Tg = 132°C, MFR = 1.2 g/10 min, flexural modulus = 3500 MPa, Charpy impact strength with notch = 1.2 kJ/m², Charpy impact strength with notch = 16 kJ/m²)
- Methacrylic copolymer (A-8): Pleximid TT50, produced by Polyplastics-Evonik Corporation
   (MMA copolymerization ratio = 30%, N-methylglutarimide copolymerization ratio = 70%, Tg = 151°C, MFR = 0.6 g/10 min, flexural modulus = 4000 MPa, Charpy impact strength with notch = 1.3 kJ/m², Charpy impact strength with notch = 20 kJ/m²)
- Maleimide-based heat-resistance agent: Polyimilex PSX0371, produced by Nippon Shokubai Co., Ltd.
   (N-phenylmaleimide copolymerization ratio = 49%, styrene copolymerization ratio = 50%, maleic anhydride copolymerization ratio = 1%, Tg = 202°C, MFR = 0.1 g/10 min (2.6 g/10 min at 265°C))
- Styrene resin (B-1) (ABS): UMG ABS EX18A, produced by Techno-UMG Co., Ltd.
- Styrene resin (B-2) (AES): Dialac SK30, produced by Techno-UMG Co., Ltd.
- Styrene resin (B-3) (ASA): Dialac S310, produced by Techno-UMG Co., Ltd.
- Styrene resin (B-4) (AS): Denka AS AS-C-800, produced by Denka Company Limited.
- Methacrylic resin (C): Parapet, produced by Kuraray Co., Ltd. (Mw = 89,000, MMA copolymerization ratio = 99.3%, MA copolymerization ratio = 0.7%, Tg = 118°C, MFR = 2.3 g/10 min, flexural modulus = 3300 MPa, Charpy impact strength with notch = 1.3 kJ/m², Charpy impact strength with notch = 22 kJ/m²)

### Production Examples: Precursor Polymer

The precursor polymers a-1 to a-5 of the Production Examples were produced according to the following methods.

### Precursor Polymer a-1

77.5 parts by mass of purified methyl methacrylate (MMA), 17.5 parts by mass of α-methylstyrene (αMSt), 5.0 parts by mass of styrene (St), 0.04 parts by mass of 2,2' -azobis(2-methylpropionitrile) (AIBN), and 0.053 parts by mass of n-octylmercaptan (n-OM) were placed in an autoclave equipped with a stirrer and uniformly dissolved, thereby obtaining a raw material for polymerization. Nitrogen gas was blown into the reactant to remove dissolved oxygen up to 3 ppm. Subsequently, a continuous-flow tank reactor equipped with a brine-cooling condenser was purged with nitrogen gas. The raw material for polymerization was continuously supplied to the tank reactor at a constant flow rate such that the average residence time was 2.5 hours to perform bulk polymerization at a polymerization temperature of 140°C, and a liquid containing a precursor polymer was continuously discharged from the tank reactor. The pressure in the tank reactor was controlled by a pressure regulation valve connected to the brine-cooling condenser. The polymerization conversion rate results are shown in Table 1. Subsequently, the liquid discharged from the reactor was heated to 210°C and supplied to a twin-screw extruder controlled to 230°C. In the twin-screw extruder, a volatile component containing unreacted monomers as a main component was separated and removed, and the precursor polymer was extruded as a strand. The strand was cut with a pelletizer to obtain a precursor polymer a-1. The weight average molecular weight Mw of the obtained precursor polymer a-1 was measured. Table 1 shows the results. Further, a precursor polymer a-2 was obtained in the same manner as in the production method for the precursor polymer a-1, except that 68.0 parts by mass of purified methyl methacrylate (MMA), 28.0 parts by mass of α-methylstyrene (αMSt), 7.0 parts by mass of styrene (St), 0.05 parts by mass of 2,2' -azobis(2-methylpropionitrile) (AIBN), and 0.01 parts by mass of n-octylmercaptan (n-OM) were used. Furthermore, a precursor polymer a-3 was obtained in the same manner as in the production method for the precursor polymer a-1, except that 73.0 parts by mass of purified methyl methacrylate (MMA), 13.0 parts by mass of α-methylstyrene (αMSt), 14.0 parts by mass of styrene (St), 0.03 parts by mass of 2,2' -azobis(2-methylpropionitrile) (AIBN), and 0.12 parts by mass of n-octylmercaptan (n-OM) were used. The polymerization conversion rates and weight average molecular weights Mw of the precursor polymers a-2 and a-3 are also shown in Table 1.

### Precursor Polymer a-4

60.0 parts by mass of purified methyl methacrylate (MMA), 25.0 parts by mass of α-methylstyrene (αMSt), 15.0 parts by mass of maleic anhydride (Mah), 0.005 parts by mass of 2,2' - azobis(2-methylpropionitrile) (AIBN), and 0.02 parts by mass of n-octylmercaptan (n-OM) were placed in an autoclave equipped with a stirrer and uniformly dissolved, thereby obtaining a raw material for polymerization. Nitrogen gas was blown into the reactant to remove dissolved oxygen up to 3 ppm. Subsequently, a continuous-flow tank reactor equipped with a brine-cooling condenser was purged with nitrogen gas. The raw material for polymerization was continuously supplied to the tank reactor at a constant flow rate such that the average residence time was 2 hours to perform bulk polymerization at a polymerization temperature of 130°C, and a liquid containing a precursor polymer was continuously discharged from the tank reactor. The pressure in the tank reactor was controlled by a pressure regulation valve connected to the brine-cooling condenser. The polymerization conversion rate results are shown in Table 1. Subsequently, the liquid discharged from the reactor was heated to 230°C and supplied to a twin-screw extruder controlled to 240°C. In the twin-screw extruder, a volatile component containing unreacted monomers as a main component was separated and removed, and the precursor polymer was extruded as a strand. The strand was cut with a pelletizer to obtain a precursor polymer. The weight average molecular weight Mw of the obtained precursor polymer was measured. Table 1 shows the results.

### Precursor Polymer a-5

An MS resin (a copolymer of methyl methacrylate (MMA) and styrene (St)) was polymerized in accordance with the method for producing copolymer (A) described in the Examples of JP2003-231785A. The ratio by mass of MMA and St placed in an autoclave was changed to obtain a precursor polymer a-5. Table 1 shows the results.

### Production Example 1

A twin-screw extruder equipped with a transport unit, a melt-kneading unit, a volatilization unit, and a discharge unit, and set to a screw rotation speed of 150 rpm and a temperature of 230°C to 250°C (trade name: TEX30α-77AW-3V, produced by The Japan Steel Works, Ltd.) was charged in its transport unit with the precursor polymer (a-1) at a rate of 15 kg/hr. In the kneading-block-attached melt-kneading unit, the amount of monomethylamine was adjusted to give the content of the glutarimide-derived structural unit shown in Table 1, and monomethylamine was injected into an additive-feeding port of the twin-screw extruder, thereby allowing a reaction between the precursor polymer (a-1) and monomethylamine to proceed. The melt-kneading unit was mostly composed of kneading disks and had a sealing element attached at each end. In the volatilization unit, by-products and excess monomethylamine were volatilized from the molten resin that passed through the melt-kneading unit and discharged through multiple vents.

The molten resin extruded in the form of a strand from a die provided at the end of the discharge unit of the twin-screw extruder was cooled in a water tank and then cut with a pelletizer to obtain pelletized methacrylic copolymer (A-1). In the methacrylic copolymer (A-1), the content of the glutarimide-derived structural unit was 21 wt%. Table 1 shows the composition and physical properties of the methacrylic copolymer (A-1).

### Production Example 2

A methacrylic copolymer (A-2) was obtained in the same manner as in Example 1, except that the precursor polymer (a-2) was used and that the amount of monomethylamine added was changed so that the content of the glutarimide-derived structural unit was 50 wt%. Table 1 shows the composition and physical properties of the methacrylic copolymer (A-2).

### Production Example 3

A methacrylic copolymer (A-3) was obtained in the same manner as in Example 1, except that the precursor polymer (a-2) was used and that the amount of monomethylamine added was changed so that the content of the glutarimide-derived structural unit was 70 wt%. Table 1 shows the composition and physical properties of the methacrylic copolymer (A-3).

### Production Example 4

A methacrylic copolymer (A-4) was obtained in the same manner as in Example 1, except that the precursor polymer (a-3) was used, and that the amount of monomethylamine added was changed so that the content of the glutarimide-derived structural unit was 36 wt%. Table 1 shows the composition and physical properties of the methacrylic copolymer (A-4).

### Production Example 5

A methacrylic copolymer (A-5) was obtained in the same manner as in Example 1, except that the precursor polymer (a-4) was used, and that the amount of monomethylamine added was changed so that the content of the glutarimide-derived structural unit was 15 wt% and the content of the maleimide-derived structural unit was 15 wt%. Table 1 shows the composition and physical properties of the methacrylic copolymer (A-5).

### Production Example 6

A methacrylic copolymer (A-6) was obtained in the same manner as in Example 1, except that the precursor polymer (a-5) was used, and that the amount of monomethylamine added was changed so that the content of the glutarimide-derived structural unit was 42 wt%. Table 1 shows the composition and physical properties of the methacrylic copolymer (A-6).

**Table 1**

| | | Production Example 1 | Production Example 2 | Production Example 3 | Production Example 4 | Production Example 5 | Production Example 6 |
|---|---|---|---|---|---|---|---|
| Methacrylic copolymer (A) | | A-1 | A-2 | A-3 | A-4 | A-5 | A-6 |
| Content of MMA-derived structural unit | wt% | 64 | 26 | 6 | 38 | 37 | 38 |
| Content of αMSt-derived structural unit | wt% | 10 | 16 | 16 | 13 | 30 | 0 |
| Content of St-derived structural unit | wt% | 5 | 8 | 8 | 13 | 0 | 20 |
| Content of Mah-derived structural unit | wt% | 0 | 0 | 0 | 0 | 3 | 0 |
| Content of N-substituted glutarimide-derived structural unit | wt% | 21 | 50 | 70 | 36 | 15 | 42 |
| Content of N-substituted maleimide-derived structural unit | wt% | 0 | 0 | 0 | 0 | 15 | 0 |
| Ratio of αMSt/(αMSt+St) | wt% | 66.7 | 66.7 | 66.7 | 50.0 | 100.0 | 0.0 |
| Weight average molecular weight | - | 85,000 | 72,000 | 77,000 | 71,000 | 67,000 | 105,000 |
| Glass transition temperature | °C | 134 | 144 | 163 | 143 | 167 | 129 |
| Flexural modulus | MPa | 3600 | 4000 | 4300 | 4070 | 4200 | 3910 |
| Melt flow rate | g/10 min | 1.7 | 6.0 | 4.0 | 6.6 | 1.5 | 1.3 |
| Charpy impact strength without notch | kJ/m² | 18 | 15 | 14 | 17 | 13 | 20 |
| Charpy impact strength with notch | kJ/m² | 1.3 | 1.1 | 1.0 | 1.2 | 0.9 | 1.4 |
| Precursor polymer (a) | | a-1 | a-2 | a-2 | a-3 | a-4 | a-5 |
| Polymerization conversion rate | % | 39 | 35 | 35 | 42 | 52 | - |
| Content of MMA-derived structural unit | wt% | 85 | 76 | 76 | 74 | 52 | 80 |
| Content of αMSt-derived structural unit | wt% | 10 | 16 | 16 | 13 | 30 | 0 |
| Content of St-derived structural unit | wt% | 5 | 8 | 8 | 13 | 0 | 20 |
| Content of Mah-derived structural unit | wt% | 0 | 0 | 0 | 0 | 18 | 0 |
| Weight average molecular weight | - | 93,000 | 80,000 | 80,000 | 79,000 | 57,000 | 95,000 |

### Examples 1 to 6

The methacrylic copolymers (A-1) to (A-5), the styrene resin (B-1), and the methacrylic resin (C) were mixed according to the formulas shown in Table 2, and the mixture was melt-kneaded at 230°C using a twin-screw extruder with an L/D ratio of 32.5 and a shaft diameter of 62.5 mm and extruded, thereby obtaining resin compositions (1) to (6). Table 2 shows the composition and physical properties of the resin compositions and the evaluation results of the molded articles.

### Comparative Examples 1 to 5

The methacrylic copolymers (A-6) to (A-8), the styrene resin (B-1), and the maleimide-based heat resistance agent were mixed according to the formulas shown in Table 2, and the mixture was melt-kneaded at 230°C using a twin-screw extruder with an L/D ratio of 32.5 and a shaft diameter of 62.5 mm and extruded, thereby obtaining resin compositions (7) to (11). Table 2 shows the composition and physical properties of the resin compositions and the evaluation results of the molded articles.

**Table 2**

| | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|
| Resin composition | | (1) | (2) | (3) | (4) | (5) | (6) | (7) | (8) | (9) | (10) | (11) |
| Methacrylic copolymer (A-1) | | 20 | 30 | | | | | | | | | |
| Methacrylic copolymer (A-2) | | | | 20 | | | | | | | | |
| Methacrylic copolymer (A-3) | | | | | 20 | | | | | | | |
| Methacrylic copolymer (A-4) | | | | | | 20 | | | | | | |
| Methacrylic copolymer (A-5) | | | | | | | 20 | | | | | |
| Methacrylic copolymer (A-6) | | | | | | | | 20 | | | | |
| Methacrylic copolymer (A-7) | | | | | | | | | 20 | | | |
| Methacrylic copolymer (A-8) | | | | | | | | | | 20 | | |
| Maleimide-based heat resistance agent | | | | | | | | | | | 20 | |
| Styrene resin (B-1) | | 80 | 60 | 80 | 80 | 80 | 80 | 80 | 80 | 80 | 80 | 100 |
| Methacrylic resin (C) | | | 10 | | | | | | | | | |
| Charpy impact strength without notch | kJ/m² | 77 | 60 | 75 | 70 | 65 | 60 | 40 | 55 | 38 | 40 | N.B. |
| Charpy impact strength with notch | kJ/m² | 5.5 | 5.0 | 5.5 | 5.1 | 4.5 | 4.2 | 3.5 | 3.9 | 2.6 | 2.5 | 16.0 |
| Flexural modulus | MPa | 2560 | 2650 | 2640 | 2700 | 2654 | 2680 | 2622 | 2440 | 2640 | 2620 | 2300 |
| Surface hardness | - | 3B | HB | 3B | 2B | 3B | 3B | 4B | 4B | 4B | 6B | 6B |
| Vicat softening temperature | °C | 108 | 111 | 110 | 113 | 109 | 114 | 107 | 102 | 111 | 109 | 103 |
| Injection moldability | - | A | A | A | A | B | B | B | B | C | B | B |
| Glossiness | - | A | A | A | A | A | A | B | B | B | B | B |

### Examples 7 to 12

The methacrylic copolymers (A-1) to (A-5), the styrene resin (B-2), and the methacrylic resin (C) were mixed according to the formulas shown in Table 3, and the mixture was melt-kneaded at 230°C using a twin-screw extruder with an L/D ratio of 32.5 and a shaft diameter of 62.5 mm and extruded, thereby obtaining resin compositions (12) to (17). Table 3 shows the composition and physical properties of the resin compositions and the evaluation results of the molded articles.

### Comparative Examples 6 to 10

The methacrylic copolymers (A-6) to (A-8), the styrene resin (B-1), and the maleimide-based heat-resistance agent were mixed according to the formulas shown in Table 3, and the mixture was melt-kneaded at 230°C using a twin-screw extruder with an L/D ratio of 32.5 and a shaft diameter of 62.5 mm and extruded, thereby obtaining resin compositions (18) to (22). Table 3 shows the composition and physical properties of the resin compositions and the evaluation results of the molded articles.

**Table 3**

| | | Ex. 7 | Ex. 8 | Ex. 9 | Ex. 10 | Ex. 11 | Ex. 12 | Comp. Ex. 6 | Comp. Ex. 7 | Comp. Ex. 8 | Comp. Ex. 9 | Comp. Ex. 10 |
|---|---|---|---|---|---|---|---|---|---|---|---|---|
| Resin composition | | (12) | (13) | (14) | (15) | (16) | (17) | (18) | (19) | (20) | (21) | (22) |
| Methacrylic copolymer (A-1) | | 20 | 30 | | | | | | | | | |
| Methacrylic copolymer (A-2) | | | | 20 | | | | | | | | |
| Methacrylic copolymer (A-3) | | | | | 20 | | | | | | | |
| Methacrylic copolymer (A-4) | | | | | | 20 | | | | | | |
| Methacrylic copolymer (A-5) | | | | | | | 20 | | | | | |
| Methacrylic copolymer (A-6) | | | | | | | | 20 | | | | |
| Methacrylic copolymer (A-7) | | | | | | | | | 20 | | | |
| Methacrylic copolymer (A-8) | | | | | | | | | | 20 | | |
| Maleimide-based heat resistance agent | | | | | | | | | | | 20 | |
| Styrene resin (B-2) | | 80 | 60 | 80 | 80 | 80 | 80 | 80 | 80 | 80 | 80 | 100 |
| Methacrylic resin (C) | | | 10 | | | | | | | | | |
| Charpy impact strength without notch | kJ/m² | 82 | 65 | 80 | 75 | 68 | 63 | 43 | 58 | 41 | 43 | N.B. |
| Charpy impact strength with notch | kJ/m² | 5.0 | 4.4 | 5.0 | 4.6 | 4.0 | 3.7 | 3.0 | 3.4 | 2.1 | 2.0 | 14.0 |
| Flexural modulus | MPa | 2400 | 2510 | 2480 | 2540 | 2494 | 2520 | 2462 | 2280 | 2480 | 2500 | 2100 |
| Surface hardness | - | 4B | F | 4B | 3B | 4B | 4B | 4B | 5B | 5B | 6B | <6B |
| Vicat softening temperature | °C | 105 | 108 | 106 | 110 | 106 | 111 | 103 | 102 | 108 | 118 | 99 |
| Injection moldability | - | A | A | A | A | B | B | B | B | C | C | B |
| Glossiness | - | A | A | A | A | A | A | B | B | B | B | B |

### Examples 13 to 18

The methacrylic copolymers (A-1) to (A-5), the styrene resin (B-2), and the methacrylic resin (C) were mixed according to the formulas shown in Table 4, and the mixture was melt-kneaded at 230°C using a twin-screw extruder with an L/D ratio of 32.5 and a shaft diameter of 62.5 mm and extruded, thereby obtaining resin compositions (23) to (28). Table 4 shows the composition and physical properties of the resin compositions and the evaluation results of the molded articles.

### Comparative Examples 11 to 15

The methacrylic copolymers (A-6) to (A-8), the styrene resin (B-1), and the maleimide-based heat-resistance agent were mixed according to the formulas shown in Table 4, and the mixture was melt-kneaded at 230°C using a twin-screw extruder with an L/D ratio of 32.5 and a shaft diameter of 62.5 mm and extruded, thereby obtaining resin compositions (29) to (33). Table 4 shows the composition and physical properties of the resin compositions and the evaluation results of the molded articles.

**Table 4**

| | | Ex. 13 | Ex. 14 | Ex. 15 | Ex. 16 | Ex. 17 | Ex. 18 | Comp. Ex. 11 | Comp. Ex. 12 | Comp. Ex. 13 | Comp. Ex. 14 | Comp. Ex. 15 |
|---|---|---|---|---|---|---|---|---|---|---|---|---|
| Resin composition | | (23) | (24) | (25) | (26) | (27) | (28) | (29) | (30) | (31) | (32) | (33) |
| Methacrylic copolymer (A-1) | | 20 | 30 | | | | | | | | | |
| Methacrylic copolymer (A-2) | | | | 20 | | | | | | | | |
| Methacrylic copolymer (A-3) | | | | | 20 | | | | | | | |
| Methacrylic copolymer (A-4) | | | | | | 20 | | | | | | |
| Methacrylic copolymer (A-5) | | | | | | | 20 | | | | | |
| Methacrylic copolymer (A-6) | | | | | | | | 20 | | | | |
| Methacrylic copolymer (A-7) | | | | | | | | | 20 | | | |
| Methacrylic copolymer (A-8) | | | | | | | | | | 20 | | |
| Maleimide-based heat resistance agent | | | | | | | | | | | 20 | |
| Styrene resin (B-3) | | 80 | 60 | 80 | 80 | 80 | 80 | 80 | 80 | 80 | 80 | 100 |
| Methacrylic resin (C) | | | 10 | | | | | | | | | |
| Charpy impact strength without notch | kJ/m² | N.B. | N.B. | N.B. | N.B. | N.B. | N.B. | 63 | 79 | 41 | 35 | N.B. |
| Charpy impact strength with notch | kJ/m² | 5.0 | 4.4 | 5.0 | 4.6 | 4.0 | 3.7 | 3.0 | 3.4 | 2.1 | 2.0 | 100 |
| Flexural modulus | MPa | 2376 | 2489 | 2456 | 2516 | 2470 | 2496 | 2438 | 2256 | 2456 | 2470 | 2070 |
| Surface hardness | - | 3B | HB | 3B | 2B | 3B | 3B | 3B | 4B | 4B | 6B | <6B |
| Vicat softening temperature | °C | 105 | 108 | 106 | 109 | 105 | 110 | 103 | 102 | 107 | 117 | 98 |
| Injection moldability | - | A | A | A | A | B | B | B | B | C | C | B |
| Glossiness | - | A | A | A | A | A | A | B | B | B | B | B |

### Examples 19 to 24

The methacrylic copolymers (A-1) to (A-5), the styrene resin (B-2), and the methacrylic resin (C) were mixed according to the formulas shown in Table 5, and the mixture was melt-kneaded at 230°C using a twin-screw extruder with an L/D ratio of 32.5 and a shaft diameter of 62.5 mm and extruded, thereby obtaining resin compositions (34) to (39). Table 5 shows the composition and physical properties of the resin compositions and the evaluation results of the molded articles.

### Comparative Examples 16 to 20

The methacrylic copolymers (A-6) to (A-8), the styrene resin (B-1), and the maleimide-based heat resistance agent were mixed according to the formulas shown in Table 5, and the mixture was melt-kneaded at 230°C using a twin-screw extruder with an L/D ratio of 32.5 and a shaft diameter of 62.5 mm and extruded, thereby obtaining resin compositions (40) to (44). Table 5 shows the composition and physical properties of the resin compositions and the evaluation results of the molded articles.

**Table 5**

| | | Ex. 19 | Ex. 20 | Ex. 21 | Ex. 22 | Ex. 23 | Ex. 24 | Comp. Ex. 16 | Comp. Ex. 17 | Comp. Ex. 18 | Comp. Ex. 19 | Comp. Ex. 20 |
|---|---|---|---|---|---|---|---|---|---|---|---|---|
| Resin composition | | (34) | (35) | (36) | (37) | (38) | (39) | (40) | (41) | (42) | (43) | (44) |
| Methacrylic copolymer (A-1) | | 20 | 30 | | | | | | | | | |
| Methacrylic copolymer (A-2) | | | | 20 | | | | | | | | |
| Methacrylic copolymer (A-3) | | | | | 20 | | | | | | | |
| Methacrylic copolymer (A-4) | | | | | | 20 | | | | | | |
| Methacrylic copolymer (A-5) | | | | | | | 20 | | | | | |
| Methacrylic copolymer (A-6) | | | | | | | | 20 | | | | |
| Methacrylic copolymer (A-7) | | | | | | | | | 20 | | | |
| Methacrylic copolymer (A-8) | | | | | | | | | | 20 | | |
| Maleimide-based heat resistance agent | | | | | | | | | | | 20 | |
| Styrene resin (B-4) | | 80 | 60 | 80 | 80 | 80 | 80 | 80 | 80 | 80 | 80 | 100 |
| Methacrylic resin (C) | | | 10 | | | | | | | | | |
| Charpy impact strength without notch | kJ/m² | 12 | 14 | 12 | 12 | 12 | 11 | 10 | 11 | 10 | 11 | 11 |
| Charpy impact strength with notch | kJ/m² | 1.1 | 1.1 | 1.0 | 1.0 | 1.0 | 1.0 | 0.8 | 0.8 | 0.8 | 0.9 | 1.0 |
| Flexural modulus | MPa | 3568 | 3532 | 3648 | 3708 | 3662 | 3688 | 3630 | 3448 | 3648 | 3960 | 3560 |
| Surface hardness | - | F | H | F | F | F | F | F | F | F | B | B |
| Vicat softening temperature | °C | 108 | 111 | 110 | 113 | 109 | 114 | 107 | 106 | 111 | 121 | 103 |
| Injection moldability | - | A | A | A | A | B | B | B | B | C | C | B |
| Glossiness | | A | A | A | A | A | A | B | B | B | B | A |

The methacrylic copolymers (A-1) to (A-5) obtained in Production Examples 1 to 5 have high heat resistance, rigidity, and fluidity. Due to the formation of ring structures by the imide cyclization reaction in the extrusion reaction, these methacrylic copolymers contain no volatile components derived from cyclic monomers. These methacrylic copolymers also have excellent compatibility with the styrene resins (B-1) to (B-4). The resin compositions obtained in the Examples contain the methacrylic copolymers having such excellent properties and the styrene resins, and thus have excellent heat resistance, surface hardness, injection moldability, and glossiness. Furthermore, the impact resistance of the styrene resins is not significantly impaired. For these reasons, the resin compositions are suitable for use as extrusion sheets, injection molding materials, and other automotive interior and exterior parts. In contrast, the methacrylic copolymer (A-6) obtained in Production Example 6 does not contain the αMSt component, and thus has low heat resistance and poor compatibility with the styrene resins (B-1) to (B-4). The resin compositions of Comparative Examples 1, 6, 11, and 16 contain the methacrylic copolymer (A-6) and have low impact resistance and poor glossiness. The methacrylic copolymer (A-7) has low heat resistance. The methacrylic copolymer (A-7) does not contain the αMSt component and thus has poor compatibility with the styrene resins (B-1) to (B-4). Furthermore, since cyclic monomers are copolymerized, the methacrylic copolymer (A-7) contains a large amount of volatile components. The resin compositions of Comparative Examples 2, 7, 12, and 17, which contain the methacrylic copolymer (A-7), have low impact resistance and produce a large amount of gas during molding, which results in mold contamination. These resin compositions also have poor glossiness. The methacrylic copolymer (A-8) has low fluidity. The methacrylic copolymer (A-8) does not contain the αMSt component and thus has poor compatibility with the styrene resins (B-1) to (B-4). The resin compositions of Comparative Example 3, 8, 13, and 18, which contain the methacrylic copolymer (A-8), have low impact resistance, and sink marks are easily formed during molding. These resin compositions also have poor glossiness. The maleimide-based heat resistance agent has low fluidity. The maleimide-based heat resistance agent does not contain the αMSt component and thus has poor compatibility with the styrene resins (B-1) to (B-4). The resin compositions of Comparative Examples 4, 9, 14, and 19, which contain the maleimide-based heat resistance agent, have low impact resistance and low surface hardness, and sink marks are easily formed during molding. These resin compositions also have poor glossiness. Comparative Examples 5, 10, 15 and 20, which do not contain the methacrylic copolymers of the present invention, have low heat resistance, surface hardness, and glossiness. In any of the above properties, the Comparative Examples are inferior to the present invention.

## Claims

1. A resin composition comprising:
5 to 49 parts by mass of a methacrylic copolymer (A) comprising 5 to 97 mass% of a methyl methacrylate unit, 1 to 70 mass% of a structural unit (R) represented by the following formula (I), 1 to 48 mass% of an α-methylstyrene unit, 1 to 48 mass% of at least one unit selected from the group consisting of a styrene unit and a maleic anhydride unit, and 0 to 20 mass% of an unsubstituted or N-substituted maleimide unit;
51 to 95 parts by mass of one or more styrene resins (B) selected from the group consisting of ABS resins, AES resins, ASA resins, and AS resins; and
0 to 30 parts by mass of a methacrylic resin (C), 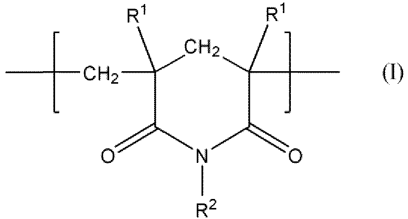 wherein in formula (I), each R¹ is independently a hydrogen atom or a methyl group, and R² is a hydrogen atom, a C₁-C₁₈ alkyl group, a C₃-C₁₂ cycloalkyl group, or a C₆-C₁₅ organic group containing an aromatic ring.

2. The resin composition according to claim 1, wherein in the methacrylic copolymer (A), the total content of the α-methylstyrene unit and the styrene unit is 2 to 40 mass% based on all structural units, and the proportion of the α-methylstyrene unit based on the total content of the α-methylstyrene unit and the styrene unit is 51 to 99 mass%.

3. The resin composition according to claim 1, wherein in the methacrylic copolymer (A), the content of the structural unit (R) is 20 to 60 mass% based on all structural units.

4. The resin composition according to claim 1, wherein in the methacrylic copolymer (A), a reaction for forming the structural unit (R) is an imide cyclization reaction in which an imidizing agent is added to a precursor polymer in an extruder, and the resulting mixture is kneaded and allowed to react.

5. The resin composition according to claim 1, wherein the resin composition has a Vicat softening temperature of 105°C to 140°C as measured by a method described in the B50 method in JIS K 7206.

6. The resin composition according to claim 1, wherein the styrene resin is an ASA resin.

7. A molded article comprising the resin composition of claim 1.

8. An injection molded article comprising the resin composition of claim 1.

9. The molded article according to claim 7, which is used as an automotive interior part or exterior part.
